# EUROPÄISCHE PATENTSCHRIFT

(11) **EP 0 764 572 B1**
(45) Veröffentlichungstag und Bekanntmachung des Hinweises auf die Patenterteilung: **15.09.1999**
(21) Anmeldenummer: 96112118.3
(22) Anmeldetag: 26.07.1996
(51) Int. Cl.: B62D 25/14, B62D 25/08

(54) **Armaturenbrett für ein Kraftfahrzeug**
Dashboard for a motor vehicle
Tableau de bord d'un véhicule automobile

(30) Priorität: 25.09.1995 DE 19535556
(43) Veröffentlichungstag der Anmeldung: 26.03.1997
(73) Patentinhaber: Dr.Ing.h.c. F. Porsche Aktiengesellschaft, 70435 Stuttgart (DE)
(72) Erfinder: Stephan, Friedrich, 71282 Hemmingen (DE)

(56) Entgegenhaltungen:
- DE-A- 3 128 785
- GB-A- 2 084 522
- US-A- 5 067 747

## Beschreibung

Die Erfindung bezieht sich auf ein Armaturenbrett für ein Kraftfahrzeug mit einer eine Lenkradsäule umgebenden Blende nach dem Oberbegriff des Anspruchs 1.

Aus der DE 31 28 785 A1 ist eine Armaturenbrettverkleidung bekannt, die einen Durchdringungsabschnitt für eine Lenksäule umfaßt, der durch Sollbruchstellen begrenzt ist. Bei einem Crashfall kann eine diesem Abschnitt gegenüberstehende Verkleidungsstulpe der Lenksäule die Sollbruchstellen aufbrechen und es erfolgt eine Verschiebung des Lenkrades mit Verkleidungsstulpe in das Armaturenbrett hinein.

Aufgabe der Erfindung ist es, ein Armaturenbrett für ein Kraftfahrzeug zu schaffen, das eine verbesserte Einrichtung zur unbehinderten Verschiebung der Lenksäule mit Lenkrad und umgebenden Verkleidungsteilen bei einem Crashfall gewährleistet und desweiteren einfach zu montieren und leicht zu ersetzende Baueinheiten aufweist.

Diese Aufgabe wir erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß im Armaturenbrett eine Blende so befestigt ist, daß sich bei einem Crash die Lenksäule mit Verkleidungsteilen sowie Schalteinrichtungen ohne Behinderung in Fahrtrichtung verschieben läßt und keine auf Block-Stellung von aufeinanderliegenden Teilen, wie die Blende mit der Verkleidungsstulpe bzw. Schalteinrichtungen am Lenkrad erfolgen kann.

Zu diesem Zweck ist die Blende in einem Abschnitt des Armaturenbrettes über mit Sollbruchstellen versehenen Befestigungen gehalten. Diese sind vorzugsweise am unteren und am oberen Rand des Ausschnitts der Blende vorgesehen. Sie können aber auch zusätzlich seitlich oder nur seitlich angeordnet sein.

Die Befestigungsmittel weisen Sollbruchstellen auf, die in Abscherebenen angeordnet sind, so daß bei Druck auf das Lenkrad im Crashfall sich die Blende über die Sollbruchstellen löst und weitestgehend frei verschiebbar ist.

Am unteren Rand der Blende sind Stifte vorgesehen, die zwischen Federklammern am Armaturenbrett gehalten sind. Die Montage wird hierdurch sehr einfach, zumal die oberen Befestigungsmittel Halteschenkel an der Blende umfassen, die über Schrauben am Armaturenbrett festgesetzt werden. Die Stifte weisen am Schaft die Sollbruchstellen auf, die so gelegt sind, daß bei einem Abscheren möglichst kein Überstand stehen bleibt. Genauso sind die Sollbruchstellen an den Haltewinkeln ausgelegt.

Ein Ausführungsbeispiel der Erfindung ist in der Zeichnung dargestellt und wird im folgenden näher beschrieben:

Es zeigen
- Fig. 1: eine schaubildliche Darstellung einer Blende,
- Fig. 2: einen Längsmittenschnitt durch die Blende mit anschließender Verkleidungsstulpe und Lenkradtopf,

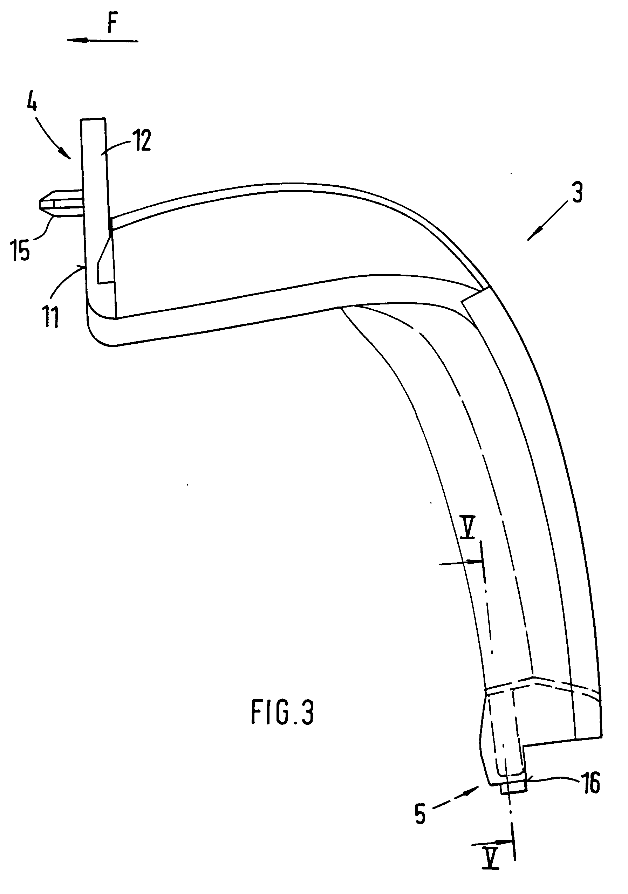

- Fig. 3: eine Seitenansicht der vergrößert dargestellten Blende in Pfeilrichtung X der Fig. 1 gesehen,

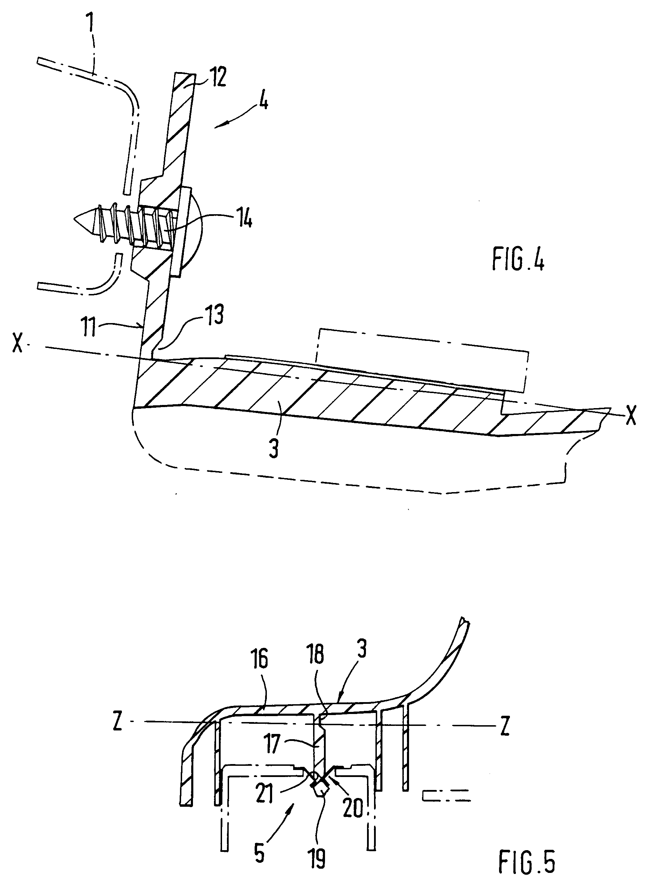

- Fig. 4: eine Ansicht in Pfeilrichtung Z der Fig. 1 auf eine obere Sollbruchstelle eines ersten Befestigungsmittels gesehen und
- Fig. 5: einen Schnitt nach der Linie V-V der Fig. 3 durch eine zweite Befestigungsstelle gesehen.

Im Armaturenbrett 1 eines Kraftfahrzeuges ist ein Ausschnitt 2 vorgesehen, in der eine Blende 3 über Befestigungsmittel 4, 5 gehalten ist. Die Blende 3 weist wiederum eine Öffnung 6 auf, in welche eine teilweise durchgesteckte Verkleidungsstulpe 7 angeordnet ist. Der Abschluß wird vom Lenkrad 8 mit Topf 9 gebildet. Die Anordnung der Bauteile 3, 7 und 9 ist so gewählt und ausgeführt, daß bei einem Crashfall ein gegenseitiges Blockieren der Teile 7, 9 an der Blende 3 bzw. am Armaturenbrett 1 verhindert wird und die Stulpe 7 sich mit der Blende 3 in Pfeilrichtung 10 durch die Öffnung 2 im Armaturenbrett bewegen kann.

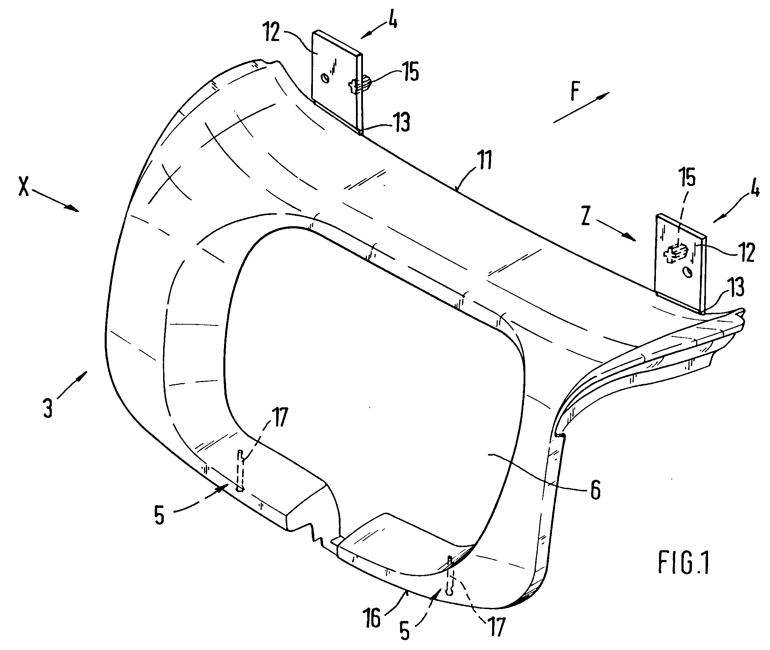

Hierzu weist die Blende 3 die Befestigungsmittel 4, 5 auf, welche am oberen Rand 11 der Blende 3 aus Haltewinkeln 12 mit Einkerbungen 13 als Sollbruchstellen bestehen. Über Schrauben 14 wird die Blende 3 mit dem Armaturenbrett 1 fest verbunden. Desweiteren sind Fixierstifte 15 in den Haltewinkeln 12 vorgesehen. Wie in Fig. 1 näher dargestellt, sind mindestens zwei Haltewinkel 12 am oberen Rand 11 der Blende 3 angeordnet.

Desweiteren weist die Blende 3 am unteren Rand 16 Stifte 17 auf, die jeweils eine Einkerbung 18 als Sollbruchstelle aufweisen. Der Stift 17 ist am freien Ende 19 zwischen Federklammern 20 gehalten, wozu der Stift 17 beidseitig Einformungen 21 aufweist.

Zur einfachen Montage im Armaturenbrett 1 wird die Blende 3 zuerst über die Stifte 17 zwischen die Federklammern 20 plaziert und dann mittels einer leichten Kippbewegung mit den Halteschenkeln 12 zur Anlage an das Armaturenbrett 1 gebracht und mit diesem über die Schrauben 14 fest verbunden.

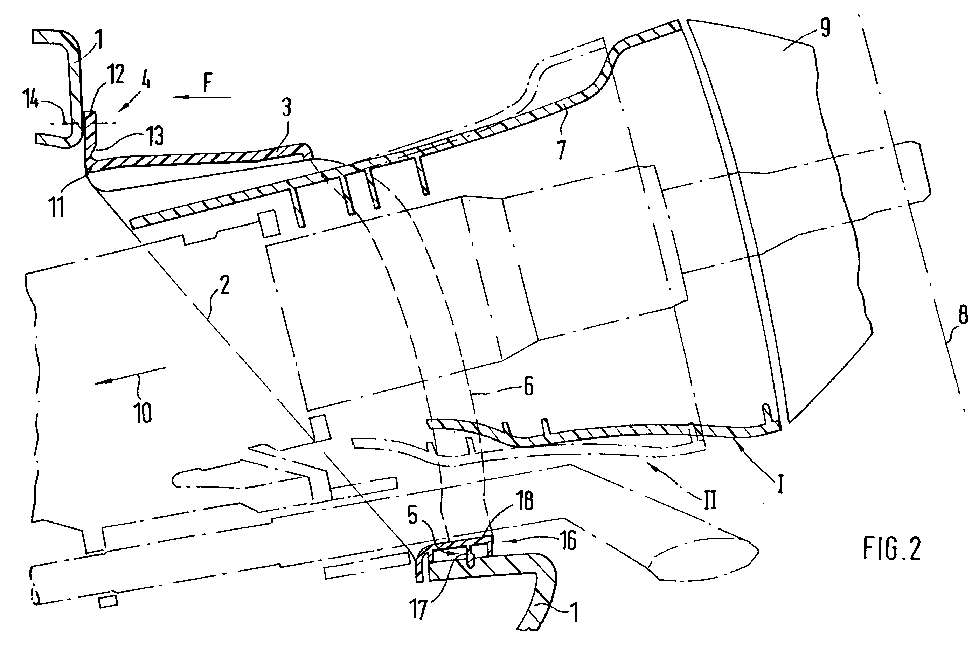

Wie in Fig. 2 näher dargestellt, ist die Stulpe 7 in Position I in einer Betriebsstellung gezeigt. Die Position II zeigt die Stulpe 7 bei einem Crashfall, bei der sie in Pfeilrichtung 10 verschoben ist. Bei einer weiteren Verschiebung in Pfeilrichtung 10 wird die Stulpe 7 in Anschlag mit der Blende 3 kommen, die sich dann über die Sollbruchstellen bzw. die Einkerbungen 13 im Haltewinkel 12 und über die Sollbruchstellen bzw. die Einkerbungen 18 an den Stiften 17 von dem Armaturenbrett 1 lösen kann. Die Abscherebenen X-X und Z-Z sind so gewählt, daß keine Behinderung durch vorstehende Teile der Haltewinkel 12 und der Stifte 17 vorkommt. Eine Beschädigung des Armaturenbrettes wird weitestgehend vermieden und die Blende 3 kann in einfacher Montageweise wieder ersetzt werden.

## Patentansprüche

1. Armaturenbrett für ein Kraftfahrzeug mit einer eine Lenksäule umgebenden Blende (3), welche in einem Ausschnitt (2) des Armaturenbrettes (1) gehalten ist und innerhalb der Blende in einer Öffnung eine mit der Lenksäule verbundene Verkleidungsstulpe (7) angeordnet ist, dadurch gekennzeichnet, daß die Blende (3) über angeordnete Befestigungsmittel (4, 5) an einem unteren Rand (16) und an einem oberen gegenüberliegenden Rand (11) mit dem Armaturenbrett (1) fest verbindbar ist und in diesen Befestigungsmitteln (4, 5) jeweils mindestens eine Sollbruchstelle (13, 18) vorgesehen ist, die am oberen Rand (11) im Übergang zwischen einem Halteschenkel (12) und dem Rand (11) der Blende (3) und am unteren Rand (16) im Befestigungsmittel (5) selbst vorgesehen ist.

2. Armaturenbrett nach Anspruch 1, dadurch gekennzeichnet, daß die Blende (3) im Crashfall bei Bruch der Sollbruchstellen (13, 18) im Ausschnitt (2) des Armaturenbrettes (1) in Pfeilrichtung (10) und in Fahrtrichtung (F) verschiebbar gehalten ist.

3. Armaturenbrett nach den Ansprüchen 1 oder 2, dadurch gekennzeichnet, daß die Befestigungsmittel (5) am unteren Rand (16) der Blende (3) aus mindestens zwei beabstandeten Stiften (17) bestehen, die jeweils über eine Schaftausnehmung (21) am freien Ende (19) zwischen Federklammern (20) des Armaturenbrettes (1) gehalten sind und der Stiftschaft an seinem Gründungsende jeweils die Sollbruchstelle (18) aufweist.

4. Armaturenbrett nach den Ansprüchen 1, 2 oder 3, dadurch gekennzeichnet, daß die Befestigungsmittel (4) am oberen Rand (11) der Blende (3) die angeformten Haltewinkel (12) umfassen, welche mit einer Befestigungsschraube (14) und mit einem Fixierstift (15) versehen sind und der Haltewinkel (12) im Eckbereich zur Blende (3) hin die Sollbruchstelle (13) aufweist.

5. Armaturenbrett nach Anspruch 1 oder einem der vorhergehenden Ansprüche, dadurch gekennzeichnet, daß die Sollbruchstellen (13, 18) an der Blende (3) derart angeordnet sind, daß sich Abscherebenen (X-X und Z-Z) ergeben und in diesen Ebenen bei Anlage der Verkleidungsstulpe (7) an der Blende (3) eine freie Verschiebung der Blende (3) mit der Stulpe (7) in das Armaturenbrett (1) hinein erfolgt.

## Claims

1. A dashboard for a motor vehicle with a moulding (3) surrounding a steering column and held in a recess (2) in the dashboard (1), and a trim sleeve (7) connected to the steering column is arranged in an opening inside the moulding, **characterized in that** the moulding (3) can be securely connected to the dashboard (1) at a lower edge (16) and at an upper opposite edge (11) by way of attached fastening means (4, 5), and the said fastening means (4, 5) have provided therein at least one respective nominal breaking point (13, 18) provided at the upper edge (11) in the transition between a holding arm (12) and the edge (11) of the moulding (3) and at the lower edge (16) in the fastening means (5) itself.

2. A dashboard according to Claim 1, **characterized in that** in the event of a crash the moulding (3) is held in the recess (2) in the dashboard (1) so as to be displaceable in the direction of the arrow (10) and in the direction of travel (**F**) when the nominal breaking points (13, 18) break.

3. A dashboard according to Claim 1 or 2, **characterized in that** the fastening means (5) at the lower edge (16) of the moulding (3) comprise at least two spaced pins (17) each held on the free end (16) between spring clips (20) of the dashboard (1) by way of a shaft recess (21), and the stem of the pin is provided with the respective nominal breaking point (18) at its base end.

4. A dashboard according to Claim 1, 2 or 3, **characterized in that** at the upper edge (11) of the moulding (3) the fastening means (4) are provided with the integrally formed holding angle members (12) provided with a fastening screw (14) and a fixing pin (15), and the holding angle member (12) is provided with the nominal breaking point (13) in the corner region towards the moulding (3).

5. A dashboard according to Claim 1 or one of the preceding Claims, **characterized in that** the nominal breaking points (13, 18) are arranged on the moulding (3) in such a way that shearing planes (**X-X** and **Z-Z**) are produced, and in the said planes the moulding (3) with the trim sleeve (7) is displaced freely into the dashboard (1) when the sleeve (7) rests against the moulding (3).

## Revendications

1. Tableau de bord d'un véhicule automobile comportant un panneau (3) entourant une colonne de direction, lequel est maintenu dans une découpe (2) du tableau de bord (1) et à l'intérieur du panneau est disposé, dans une ouverture, un fourreau de revêtement (7) relié à la colonne de direction, caractérisé en ce que le panneau (3) peut être assemblé fixement au tableau de bord (1), par des moyens de fixation (4, 5) disposés sur un bord inférieur (16) et sur un bord supérieur (11) opposé, et en ce que dans chacun de ces moyens de fixation (4, 5) est prévu au moins un emplacement destiné à la rupture (encoches 13, 18), qui est prévu lui-même sur le bord supérieur (11), dans la transition entre une branche de maintien (12) et le bord (11) du panneau (3) et sur le bord inférieur (16) dans le moyen de fixation (5) lui-même.

2. Tableau de bord selon la revendication 1, caractérisé en ce que le panneau (3) en cas de collision et de rupture des emplacements destinés à la rupture (13, 18) est maintenu de manière à coulisser dans la découpe (2) du tableau de bord (1), dans le sens de la flèche (10) et dans le sens de marche (F).

3. Tableau de bord selon les revendications 1 ou 2, caractérisé en ce que les moyens de fixation (5) sur le bord inférieur (16) du panneau (3) sont constitués d'au moins deux broches (17) espacées, qui sont maintenues chacune par un évidement de tige (231) à l'extrémité libre (19), entre des agrafes élastiques (20) du tableau de bord (1), et la tige de la broche présente l'emplacement destiné à la rupture (18), à son extrémité de fond.

4. Tableau de bord selon les revendications 1, 2 ou 3 caractérisé en ce que les moyens de fixation (4) comprennent sur le bord supérieur (11) du panneau (3), les cornières de maintien (12) venues de moulage, qui sont pourvues d'une vis de fixation (14) et d'une goupilled' indexation (15) et l'équerre de maintien (12) présente dans la zone d'angle vers le panneau (3), l'emplacement destiné à la rupture (13).

5. Tableau de bord selon la revendication 1 ou l'une des revendications précédentes, caractérisé en ce que les emplacements destinés à la rupture (13, 18) sont disposés sur le panneau (3) de manière qu'il en résulte des plans de cisaillement (X-X) et (Z-Z) et que dans ces plans se produise un libre déplacement du panneau (3) avec le fourreau (7) dans le tableau de bord (1), en cas d'application du fourreau de revêtement (7) contre le panneau (3).
